# EUROPÄISCHE PATENTSCHRIFT

(11) **EP 0 886 586 B1**
(45) Veröffentlichungstag und Bekanntmachung des Hinweises auf die Patenterteilung: **29.12.1999**
(21) Anmeldenummer: 97915384.8
(22) Anmeldetag: 19.03.1997
(51) Int. Cl.: B60K 15/00, F02M 31/20

(54) **KRAFTSTOFFKÜHLUNG BEI EINSPRITZANLAGEN VON VERBRENNUNGSMOTOREN, DIE EINE GERINGE VORRATSMENGE AN KRAFTSTOFF AUFWEISEN**
FUEL COOLING SYSTEM FOR INTERNAL COMBUSTION ENGINE INJECTION SYSTEMS WITH A LOW FUEL SUPPLY
SYSTEME DE REFROIDISSEMENT DU CARBURANT POUR SYSTEMES D'INJECTION DE MOTEURS A COMBUSTION INTERNE A RESERVE EN CARBURANT REDUITE

(30) Priorität: 22.03.1996 DE 19611288
(43) Veröffentlichungstag der Anmeldung: 30.12.1998
(73) Patentinhaber: Dolmar GmbH, 22045 Hamburg (DE)
(72) Erfinder: MATTHEES, Klaus, D-09599 Freiberg (DE); SINGER, Andreas, D-08427 Fraureuth (DE); SCHULZ, Peter, D-09123 Chemnitz (DE); SCHÖNHAAR, Jochen, D-22529 Hamburg (DE)
(74) Vertreter: Gerbaulet, Hannes
(86) Internationale Anmeldenummer: EP9701362
(87) Internationale Veröffentlichungsnummer: WO9735737

(56) Entgegenhaltungen:
- EP-A- 0 292 983
- DE-A- 4 110 264
- GB-A- 2 246 988
- US-A- 4 924 838
- PATENT ABSTRACTS OF JAPAN vol. 004, no. 179 (M-046), 11.Dezember 1980 & JP 55 128653 A (MATSUSHITA ELECTRIC IND CO LTD), 4.Oktober 1980,

## Beschreibung

### Technisches Gebiet

Die Erfindung betrifft eine Kraftstoffkühleinrichtung für Einspritzanlagen von Verbrennungsmotoren, denen eine geringe Vorratsmenge an Kraftstoff zugeordnet ist, insbesondere für Verbrennungsmotoren in handgeführten Arbeitsgeräten, wobei in der Einspritzanlage ständig eine wesentlich größere Kraftstoffmenge als die Einspritzmenge in den Druckkreis gefördert wird und von diesem entlastet abströmt.

### Stand der Technik

Bei Verbrennungsmotoren für handgeführte Arbeitsgeräte, aber auch bei anderen Verbrennungsmotoren, ist man bestrebt, wegen der optimalen Kraftstoffausnutzung den Ausstoß an Schadstoffen, die sich bei unvollständiger Verbrennung des Kraftstoffes in Verbrennungsgasen finden, möglichst gering zu halten. Daher wird überschüssiger, d. h. nicht unbedingt benötigter Kraftstoff in den Kraftstofftank zurückgeführt. Durch das permanente Umpumpen der relativ geringen Kraftstoffmenge erwärmt sich der Kraftstoff und es kann zur Gasblasenbildung kommen. Deshalb muß eine Kühlung des zurückgeführten Kraftstoffes erfolgen.

So ist es bekannt, einen Wärmetauscher in Kraftstoffördersystemen eines Verbrennungsmotors vorzusehen, der mit einer spiralförmigen, mit Kühllamellen ausgestatteten Rohr- bzw. Wellschlauchanordnung versehen ist, durch die zentral ein Kühlmedium strömt (DE 41 10 264 A1).

Ein Wärmetauscher dieser Bauart bringt zwar eine hohe Kühlleistung, jedoch treten beim Durchströmen des Kühlmittels hohe Strömungswiderstände auf, die sich insbesondere bei der Verwendung von angesaugter Luft für den Verbrennungsvorgang des Verbrennungsmotors nachteilig auswirken.

Aus der US-A-4924838 ist bereits eine Kraftstoffkühleinrichtung für Einspritzanlagen von Verbrennungsmotoren, denen eine geringe Vorratsmenge an Kraftstoff zuordnet ist, bekannt, wobei in der Einspritzanlage ständig eine wesentlich größere Kraftstoffmenge als die Einspritzmenge in den Druckkreis gefördert wird und von dieser entlastet über eine Rücklaufleitung abströmt, wobei die Rücklaufleitung durch Ansaugluft für den Verbrennungsmotor gekühlt wird. Die Rücklaufleitung ist dabei als schmales Profil spiralförmig ausgebildet und als Leitanordnung vor dem Kühlgebläse des Verbennungsmotors angeordnet ist.

### Darstellung der Erfindung

Es ist daher Aufgabe der Erfindung, eine gattungsgemäße Kraftstoffkühleinrichtung derart zu verbessern, daß eine optimale Kraftstoffkühlung erfolgt, ohne andere Betriebsparameter negativ zu beeinflussen.

Diese Aufgabe wird durch die in Anspruch 1 angegebenen Merkmale gelöst.

Dabei ist vorgesehen, daß die Rücklaufleitung durch Ansaug- oder Kühlluft für den Verbrennungsmotor gekühlt wird, ohne den Strömungswiderstand des jeweiligen Luftstroms wesentlich zu ändern. Außerdem wird das Ansaugrohr des Verbrennungsmotors den Kraftstofftank durchdringend zu führen, wobei das Ansaugrohr an seiner äußeren Oberfläche mit Rippen, Stegen, Lamellen oder andere die Oberfläche vergrößernde Einrichtungen aufweist, die wiederum von einem am Boden des Kraftstofftanks mündenden Rücklaufring umgeben sind. Der Rücklauf aus dem Druckkreis bzw. die Einleitung in den Rücklaufring erfolgt an dem vom Boden des Kraftstofftanks an entferntesten liegenden Ende des Rücklaufrings, wobei die Einleitungsöffnung in den Rücklaufring für den rückgeführten Kraftstoff höhergelegen ist als die bodenseitige Austrittsöffnung des Rücklaufrings im Kraftstofftank.

Gemäß einer bevorzugten Ausführungsform ist vorgesehen, daß die Rücklaufleitungals schmales Profil mit großer Oberfläche spiralförmig ausgebildet und als Leitanordnung vor oder nach dem Kühlgebläse des Verbrennungsmotors angeordnet ist.

Als vorteilhaft hat sich die Verwendung von Metallspanpaketen erwiesen, die zwischen den Rippen oder Lamellen des Ansaugrohres angeordnet werden und die den Wärmeaustausch, bedingt durch die nochmals vergrößerte Oberfläche, zwischen dem rückfließenden Kraftstoff und der Ansaugluft verbessern.

Der Luftfilter des Ansaugrohres wird vorzugsweise derart ausgestaltet, daß dieser lösbar mit dem Ansaugrohr in den Kraftstofftank hineinreicht, wobei auch der Luftfilter eine Rücklaufleitung mit großer Oberfläche innerhalb des Filtergehäuses aufweisen kann, zwischen der sich auswaschbare Filterflächen oder -medien befinden.

Der Rücklaufring bzw. die Rücklaufleitung kann auswaschbare Filtermedien o. dgl. aufweisen, so daß gleichzeitig auch eine Reinigung des zurückfließenden Kraftstoffes erfolgen kann.

Nach einer weiteren bevorzugten Ausführungsform ist es vorgesehen, die Rücklaufleitung als schmales Profil mit großer Oberfläche spiralförmig auszubilden und als Leiteinrichtung vor dem Kühlgebläse für den Verbrennungsmotor anzuordnen.

Weitere vorteilhafte Ausgestaltungen sind in den Unteransprüchen gekennzeichnet.

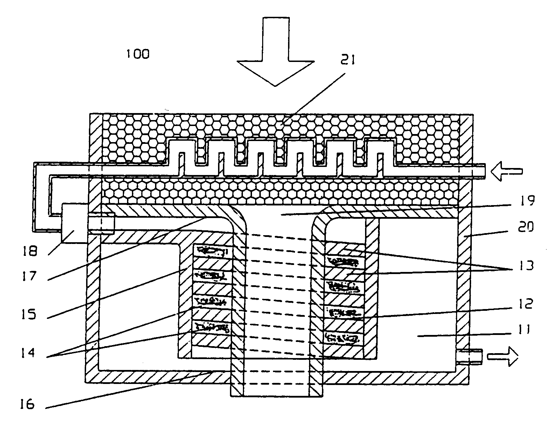

### Kurze Beschreibung der Zeichnung

Nachstehend wird ein Ausführungsbeispiel der Erfindung anhand einer Zeichnung näher erläutert. Die Zeichnung zeigt in geschnittener Ansicht einen Kraftstofftank, der in erfindungsgemäßer Weise vom Ansaugrohr zur Ausgestaltung einer Kraftstoffkühleinrichtung durchdrungen ist.

### Bester Weg zur Ausführung der Erfindung

Die Kraftstoffkühleinrichtung 100 besteht aus einem Ansaugrohr 10, das durch einen Kraftstofftank 11 geführt ist. An der äußeren Oberfläche 12 des Ansaugrohres 10 sind Lamellen 13 zur Vergrößerung der Oberfläche 12 vorgesehen. Zwischen den Lamellen 13 sind Metallspanpakete 14 eingebracht, die nochmals die Oberfläche 12 vergrößern. Umgeben wird das Ansaugrohr 10 innerhalb des Kraftstofftanks 11 von einem Rücklaufring 15, der zum Boden 16 des Kraftstofftanks 11 hin offen ist. Eingeleitet wird der zurückgeleitete Kraftstoff auf der zum Boden 16 entgegengesetzten Seite 17 des Rücklaufrings 15 über den Druckregler 18. Die Ansaugöffnung 19 des Ansaugrohrs 10 schließt in etwa mit dem Gehäuse 20 des Kraftstofftanks 11 ab. In diese Ansaugöffnung 19 ist ein Luftfilter 21 derart eingesetzt, daß er in den Kraftstofftank 11 hineinragt und zwar soweit, bis die Oberfläche 12 des Ansaugrohrs 10 von Rücklaufring 15 überdeckt wird. Bodenseitig tritt das Ansaugrohr 10 wieder aus dem Kraftstofftank 11 aus. Die Rücklaufleitung 22 kann dabei zur zusätzlichen Kühlung im Luftfiltergehäuse 23 durch den Luftfilter 21 verlaufen.

### Bezugszeichenliste:

- Kraftstoffkühleinrichtung: 100
- Ansaugrohr: 10
- Kraftstofftank: 11
- Oberfläche: 12
- Lamellen: 13
- Metallspanpaket: 14
- Rücklaufring: 15
- Boden: 16
- Seite: 17
- Druckregler: 18
- Ansaugöffnung: 19
- Gehäuse: 20
- Luftfilter: 21
- Rücklaufleitung: 22
- Luftfiltergehäuse: 23

## Patentansprüche

1. Kraftstoffkühleinrichtung (100) für Einspritzanlagen von Verbrennungsmotoren, denen eine geringe Vorratsmenge an Kraftstoff zugeordnet ist, insbesondere für Verbrennungsmotoren in handgeführten Arbeitsgeräten, wobei in der Einspritzanlage ständig eine wesentlich größere Kraftstoffmenge als die Einspritzmenge in den Druckkreis gefördert wird und von dieser entlastet über eine Rücklaufleitung (22) abströmt, wobei die Rücklaufleitung (22) durch Ansaug- oder Kühlluft für den Verbrennungsmotor gekühlt wird,
dadurch gekennzeichnet,
daß die Rücklaufleitung (22) mit einem Rücklaufring (15) verbunden ist, der das Ansaugrohr (10) des Verbrennungsmotors in dem Bereich umgibt, in dem das Ansaugrohr (10) durch den Kraftstofftank (11) geführt ist, wobei die äußere Oberfläche (12) des Ansaugrohrs mit Rippen, Stegen, Lamellen (13) oder anderen die Oberfläche vergrößernden Einrichtungen versehen ist und daß die Einleitungsöffnung in den Rücklaufring (15) für den rückgeführten Kraftstoff höhergelegen ist als die bodenseitige Austrittsöffnung des Rücklaufrings (15) im Kraftstofftank (11).

2. Kraftstoffkühleinrichtung nach Anspruch 1,
dadurch gekennzeichnet,
daß die Rücklaufleitung als schmales Profil mit großer Oberfläche spiralförmig ausgebildet und als Leitanordnung vor oder nach dem Kühlgebläse des Verbrennungsmotors angeordnet ist.

3. Kraftstoffkühleinrichtung nach Anspruch 1 oder 2,
dadurch gekennzeichnet,
daß zwischen den Rippen, Stegen, Lamellen (13) oder anderen die Oberfläche (12) vergrößernden Einrichtungen Metallspanpakete (14) angeordnet sind.

4. Kraftstoffkühleinrichtung nach Anspruch 2 oder 3,
dadurch gekennzeichnet,
daß der Luftfilter (21) des Ansaugrohrs (10) in den Kraftstofftank (11) hineinreichend angeordnet ist, wobei der Luftfilter (21) mit dem Ansaugrohr (10) lösbar verbunden ist.

5. Kraftstoffkühleinrichtung nach Anspruch 4,
dadurch gekennzeichnet,
daß der Luftfilter (21) ebenfalls die Rücklaufleitung (22) mit großer Oberfläche innerhalb des Filtergehäuses (23) aufweist, zwischen der sich auswaschbare Filterflächen oder -medien befinden.

## Claims

1. A fuel cooling device (100) for injection installations of internal combustion engines to which a low fuel stock quantity is assigned, especially for internal combustion engines in hand-operated tools, whereby a substantially bigger fuel quantity is continuously delivered in the injection installation than the injection quantity into the pressure circuit and, relieved thereof, flows off over a return pipe (22), whereby the return pipe (22) is cooled by suction or cooling air for the internal combustion engine,
characterized in
that the return pipe (22) is connected with a return ring (15) which surrounds the suction pipe (10) of the internal combustion engine in the area in which the suction pipe (10) is guided through the fuel tank (11), whereby the outer upper surface (12) of the suction pipe is provided with ribs, webs, lamellae (13) or other devices which increase the upper surface and that the discharge opening into the return ring (15) for the recycled fuel is situated higher than the ground outlet of the return ring (15) in the fuel tank (11).

2. A fuel cooling device according to claim 1,
characterized in
that the return pipe is spirally configured as a narrow profile with a big upper surface and is placed as a guiding device before or after the cooling fan of the internal combustion engine.

3. A fuel cooling device according to claim 1 or 2,
characterized in
that scob packets (14) are placed between the ribs, webs, lamellae (13) or other devices which increase the upper surface (12).

4. A fuel cooling device according to claim 2 or 3,
characterized in
that the air filter (21) of the suction pipe (10) is placed so that it penetrates into the fuel tank (11), the air filter (21) being removably connected with the suction pipe (10).

5. A fuel cooling device according to claim 4,
characterized in
that the air filter (21) also shows the return pipe (22) with a big upper surface inside the filter case (23) between which washable filtering surfaces or media are placed.

## Revendications

1. Dispositif de refroidissement de carburant (100) pour installations d'injection de moteurs à combustion interne auxquels est effectée une faible quantité de réserve de carburant, en particulier pour des moteurs à combustion interne dans des outils commandés à la main, une quantité de carburant beaucoup plus grande étant continuellement alimentée dans l'installation d'injection que la quantité d'injection dans le circuit de pression et, déchargée de celle-ci, s'écoule par une conduite de retour (22), la conduite de retour (22) étant refroidie par de l'air d'aspiration ou de l'air de refroidissement pour le moteur à combustion interne,
caractérisé en ce
que la conduite de retour (22) est reliée à un anneau de retour (15) qui entoure le tube d'aspiration (10) du moteur à combustion interne dans la zone dans laquelle le tube d'aspiration (10) traverse le réservoir de carburant (11), la surface extérieure (12) du tube d'aspiration étant pourvue de nervures, barrettes, lamelles (13) ou d'autres dispositifs qui agrandissent la surface et que l'ouverture de déversement dans l'anneau de retour (15) pour le carburant recyclé est située plus haut que l'ouverture de sortie côté fond de l'anneau de retour (15) dans le réservoir de carburant (11).

2. Dispositif de refroidissement de carburant selon la revendication 1,
caractérisé en ce
que la conduite de retour est configurée en forme de spirale comme un profil étroit avec une grande surface et qu'elle est placée comme dispositif de guidage devant ou après la soufflante de refroidissement du moteur à combustion interne.

3. Dispositif de refroidissement de carburant selon la revendication 1 ou 2,
caractérisé en ce
des paquets de copeaux de métal (14) sont placés entre les nervures, barrettes, lamelles (13) ou autres dispositifs qui agrandissent la surface (12).

4. Dispositif de refroidissement de carburant selon la revendication 2 ou 3,
caractérisé en ce
que le filtre à air (21) du tube d'aspiration (10) est placé en pénétrant dans le réservoir de carburant (11), le filtre à air (21) étant relié de manière amovible au tube d'aspiration (10).

5. Dispositif de refroidissement de carburant selon la revendication 4,
caractérisé en ce
que le filtre à air (21) présente également la conduite de retour (22) avec une grande surface à l'intérieur du bâti de filtre (23) entre laquelle se trouvent des surfaces filtrantes ou milieux filtrants lavables.
